Europäisches Patentamt

**(19)** European Patent Office

Office européen des brevets

**(11)** **EP 0 772 405 B1**

**(12)** **EUROPEAN PATENT SPECIFICATION**

**(45)** Date of publication and mention
of the grant of the patent:
**03.11.1999 Bulletin 1999/44**

**(21)** Application number: **95923894.0**

**(22)** Date of filing: **16.06.1995**

**(51)** Int. Cl.[6]: **A23L 1/217**

**(86)** International application number:
**PCT/US95/07610**

**(87)** International publication number:
**WO 96/01572 (25.01.1996 Gazette 1996/05)**

**(54)** **PROCESS FOR FORMING IMPROVED RIPPLED CHIP-TYPE PRODUCTS**

VERFAHREN ZUR HERSTELLUNG VERBESSERTER WELLENFÖRMIGER IMBISS-CHIPS

PROCEDE DE FORMAGE DE PRODUITS AMELIORES RESSEMBLANT A DES CHIPS GAUFRES

**(84)** Designated Contracting States:
**AT BE CH DE DK ES FR GB GR IE IT LU NL PT SE**

**(30)** Priority: **08.07.1994 US 272168**

**(43)** Date of publication of application:
**14.05.1997 Bulletin 1997/20**

**(73)** Proprietor:
**THE PROCTER & GAMBLE COMPANY**
**Cincinnati, Ohio 45202 (US)**

**(72)** Inventors:
 • **DAWES, Nancy, Coultrip**
  **Cincinnati, OH 45249 (US)**
 • **HANEY, Michael, Wayne**
  **Jackson, TN 38305 (US)**
 • **MCDONALD, Gerald, C.**
  **Fairfield, OH 45014 (US)**
 • **OROSA, Mario, Escobar**
  **Jackson, TN 38305 (US)**

 • **PRATER, Larry, Dean**
  **Lexington, TN 38351 (US)**
 • **VILLAGRAN, Maria, Dolores, M.-S.**
  **West Chester, OH 45069 (US)**
 • **WOOTEN, Joan, Carol**
  **Cincinnati, OH 45231 (US)**
 • **ZIMMERMAN, Stephen, Paul**
  **Wyoming, OH 45115 (US)**
 • **TOMAN, Lori, Jean**
  **Cincinnati, OH 45209 (US)**

**(74)** Representative:
 **Brooks, Maxim Courtney et al**
 **Procter & Gamble Technical Centres Limited,**
 **Whitley Road,**
 **Longbenton**
 **Newcastle upon Tyne NE12 9TS (GB)**

**(56)** References cited:
 **FR-A- 2 270 803        GB-A- 2 172 185**

## Description

The present invention relates to a food processing method and more particularly to a process for producing uniformly shaped improved rippled chip-type products from a formulated dough sheet.

### BACKGROUND

Technical innovations in the food processing art have given the consumer a superior chip-type alternative to conventional potato chips made from slices of raw potatoes. These innovations have produced chip-type food products which have a uniform color, texture and shape. For example, US Patent 3,998,975, Liepa, issued December 21, 1976, discloses a process for preparing formulated potato chips which comprises mixing dehydrated cooked potatoes with water to form a dough, forming the dough into shaped pieces, and frying the pieces until they are crisp.

Such innovations have been further developed to provide the consumer with rippled chip-type products which have a uniform color, texture and shape. For example, US Patent 3,956,517, Curry, Levine and Rose, issued May 11, 1978 discloses a process for producing uniformly shaped chip-type products from dough material, wherein the product has a rippled configuration impressed thereon. Unfortunately, such processes generally produce a chip perceived by the consumer as less than optimal. For example, consumers perceive such chips as overly thick, greasy and having excessive mass in the mouth during chewing, and not as crisp as rippled chips made from slices of raw potatoes.

Based on the foregoing, there is a need for a process for producing a uniformly shaped rippled chip-type product from dough material, wherein the resulting product has improved mouthfeel characteristics such as increased crispness and decreased mass in the mouth during chewing.

It is an object of the present invention to provide a novel process for producing uniformly shaped rippled chip-type product from a dough material, wherein the resulting chips have improved consumer acceptance.

It is also an object of the present invention to provide rippled chips produced by such a process.

These and other objects of the present invention will become evident to those skilled in the art from a reading of the present disclosure with the appended claims.

### SUMMARY

The present invention is directed to a process for producing a uniformly shaped rippled chip-style product which satisfies the need for improved consumer acceptance. A process having features of the present invention comprises sheeting a formulated dough material comprising a dry matter component and a liquid matter component, blended together. The dry matter component comprises from 25% to 75% potato flakes, from 25% to 75% potato granules, from 5% to 20% potato starch. The liquid component comprises from 1% to 25% maltodextrin, from 0.5% to 10% emulsifier, and from 65% to 98% water. The dough sheet is passed between a pair of rollers, one of said rollers having a smooth surface and the other having an annularly grooved surface. The dough sheet has a thickness of from 1.27mm to 2.54mm (0.05" to 0.1"). The gap between said rollers is adjusted so as to impress, using a pressure of from 30 lb/in to 180 lb/in (206.850 to $1.241 \cdot 10^3$ Pa) a rippled configuration on only one surface of the dough sheet, leaving the other surface substantially smooth. One of the rollers has an annularly grooved surface comprising a plurality of annularly disposed grooves wherein the grooves are disposed from 1.27mm to 2.54mm (0.05" to 0.1") from the annularly grooved roll surface, spaced apart on the annularly grooved roll surface, one from another, from 0.018mm to 1.65mm (0.07" to 0.13"), having a distance of from 0.51mm to 3.3mm 0.02" to 0.065") wide at the surface of the annularly grooved roll, and consisting of converging sides which are disposed at an acute angle of from 10° to 40° and having a rounded bottom. The sheet is out into desired chip-like portions and further processed, as by deep frying, to form chip-type products having alternate arcuate ridges and grooves on both surfaces which provides a rippled effect on both sides of the product.

### BRIEF DESCRIPTION OF THE DRAWINGS

While the specification concludes with claims particularly pointing out and distinctly claiming the subject matter regarded as forming the present invention, it is believed the invention will be better understood from the following description taken in connection with the accompanying drawings, in which:

FIG. 1 is a schematic elevational view of a preferred embodiment of the present invention;

FIG. 2 is an enlarged fragmentary cross-sectional view of a preferred embodiment of the present invention taken along line 2-2 of FIG. 1 showing the interface of a smooth and an anularly grooved roller with a dough sheet therebetween; and

FIG. 3 is an illustrative cross-sectional view of a segment of a chip-type product produced by the process of the present invention.

DETAILED DESCRIPTION

The following is a list of definitions for terms used herein.

"Comprising" means that other steps and other ingredients which do not affect the end result can be added. This term encompasses the terms "consisting of" and "consisting essentially of".

"Flakes" refers to potato flakes.

"Granules" refers to potato granules.

"lb/in" means pounds per linear inch.

"Product" refers to the final rippled chip-type product produced by the process of the present invention.

"Water absorbance index" and "WAI" refers to the measurement of the water holding capacity of any carbohydrate based material as a result of a cooking process. (See for example Anderson, R. A., Conway, H. F., Pfeifer, V. F. and Griffin, Jr., E. L, 1969, *Gelatinization of Corn Grits By Roll- and Extrusion-Cooking*. CEREAL SCIENCE TODAY; 14(1):4). This measurement is typically expressed as the ratio of mass of water held per unit mass of material. The WAI for a sample is determined by the following procedure. The weight to two decimal places of an empty centrifuge tube is determined. Two grams of dry sample (e.g., potato flakes) are placed into the tube. Thirty mililiters of water is added to the tube. The water and sample are stirred vigorously to insure no dry lumps remain. The tube is placed in a 29°C (85°F) water bath for 30 min., repeating the stirring procedure at 10 and 20 min. The tube is then centrifuged for 15 min. at 3,000 RPM. The water is then decanted from the tube, leaving a gel behind. The tube and contents are weighed. The WAI is calculated by dividing the weight of the resulting gel by the weight of the dry sample (i.e., [weight of tube and gel] - [weight of tube] + [weight of dry flakes] ).

All percentages are by weight of total composition unless specifically stated otherwise.

All ratios are weight ratios unless specifically stated otherwise.

A process according to the present invention essentially follows the process disclosed in US Patent 3,956,517 modified to include specific limitations surprisingly critical to the production of a uniformly shaped rippled chip-type product having improved mouthfeel characteristics. The process comprises the steps of sheeting a formulated dough material, wherein the dough material comprises a dry matter component and a liquid matter component, blended together, wherein the dry matter component comprises from 25% to 75% potato flakes, from 25% to 75% potato granules, from 5% to 20% potato starch, and the liquid component comprises from 1% to 25% maltodextrin, from 0.5% to 10% emulsifier, and from 65% to 98% water; impressing a rippled configuration of substantially parallel arcuate ridges and grooves on only one surface of the dough sheet by passing said dough sheet through the nip of a first and second mill roll, the first roll having a smooth surface and the second mill roll having an annularly grooved surface wherein each groove is disposed into the surface of the second mill roll (also referred to as the "annularly grooved roll") a distance of from 1.27mm to 2.54mm (0.05" to 0.1"), is spaced apart on the second mill roll from 1.78mm to 3.3mm ( 0.07" to 0.13") from each other, is from 0.51mm to 1.65mm (0.02" to 0.065") wide at the surface of the second mill roll, consists of converging sides which are disposed at an acute angle of from 10° to 40° to each other, and has a rounded bottom; removing the surface configured dough sheet from the first and second mill rolls; cutting suitably shaped pieces from the surface-configured dough sheet; and cooking the dough pieces to provide a crispy chip-type product having a series of distinct and substantially parallel arcuate ridges and grooves extending across both surfaces which effect a rippled appearance to the chip-type product.

The invention is described in more detail below.

Dough

The material to be treated in accordance with the present invention is a formulated dough suitable for sheeting and subsequent deep-fat frying to form chip-type food products. The dough is formulated such that it may be formed into a coherent workable dough sheet for further processing in accordance with the invention. The dough material comprises a dry component and a liquid component which are blended together. The preferred material for treatment in accordance with the present invention comprises a dry component comprising potato flakes, potato granules and potato starch; and a liquid component comprising maltodextrin, emulsifier and water. The following percentages are given with reference to weight percent in the dry component for potato flakes, granules and starch, and in the liquid component for maltodextrin, emulsifier and water.

a. Dry component

It has been surprisingly discovered that certain physical properties of the dough material have a critical impact on the ability to deliver an improved rippled chip-type product, namely the WAI of the dry component. The WAI directly relates to the ability of the dry component to hold water and form a sheet During the milling and embossing steps (discussed in more detail below), the dough material is subjected to a tremendous level of shear forces. A WAI that is too low translates into a low water mobility within the dough sheet, thereby limiting sufficient starch to water bonding. The result would be a weak dough, incapable of forming a continuous sheet. Such a weak dough will tear during the milling and embossing steps, precluding production of the final rippled chip-type product. Furthermore, a WAI that is too high can cause over plasticization of the dough material, resulting in increased dough expansion during frying. Over expansion can result in reduction or elimination of embossed ridging, resulting in an unsatisfactory final product. A very high WAI will also result in a dough material incapable of forming a continuous sheet. Therefore, a critical WAI range is necessary to produce the rippled chip-type products of the present invention.

Preferably the dry component of the dough material has a WAI of from 4 to 9, more preferably from 4.5 to 8, more preferably

Potato flakes are made from dehydrated disrupted potato cells, and rehydrate relatively rapidly as compared to potato granules. The ratio of flakes to granules in the dough composition is critical to the texture of the final rippled chip-type product. As the level of flakes increases higher than 80% in the dry component, the resulting product will be more expanded internally. This results in a product having a foamy structure, thereby reducing crispiness. When the flakes level is less than 25%, the dough is nearly impossible to sheet. The difficulty is due to the flakes being responsible for providing the structure and water binding properties necessary to form a sheet. The WAI and viscosity of the dough material will increase as the level of flakes in the dough composition increases. Preferably the WAI for flakes is from 8 to 10, more preferably from 8.2 to 9.5, more preferably still from 8.3 to 9.0, and most preferably 8.5. Preferably the dry component comprises from 25% to about 75% potato flakes; more preferably from 35% to 65%, more preferably still from 40% to 60%, most preferably 45%.

Potato granules are primarily discrete undamaged potato cells, and rehydrate relatively slowly as compared to potato flakes. The granules generally act as an inert ingredient in dough formulation, as compared to the flakes. However, the variation in the WAI of granules from different lots may have an effect on the attributes of the resulting product. Preferably the WAI for granules is from 4 to 8, more preferably from 4.3 5.7, more preferably still 5. For granules having a WAI of 4 to 5, the ratio of flake to granules is preferably from 1:1 to 3:1, more preferably from 1:1 to 2:3, more preferably 3:2. For granules having a WAI of 5 to 6, the flakes to granules ratio is preferably from 1:3 to 3:1, more preferably from 1:2 to 2:1, more preferably still from 1:2 to 1:1. A granules level of greater than 80% will result in a sheet subject to tearing and the formation of pinholes in the final product. A granules level of less than 20% resulting in an expanded product. In either case, the ridging of the final product will be poor. Preferably the dry component comprises from 25% to 75% potato granules; more preferably from 35% to 65%, more preferably still from 40% to 60%, most preferably 45%.

The potato starch used in the present invention is in its native stage. In other words, it has not been cooked or pretreated in any way. Therefore, its WAI tends to be very low (about 2-3). The starch acts as a texture aid component. As the starch level increases, particularly above 20%, it produces an undesirable delamination of the product and high fats. Lowering the starch level, particularly below 5%, the crispiness and initial crunch of the final product decreases. Preferably the dry component comprises from 5% to 20% added potato starch (i.e., in addition to the starch inherently contained in the potato flakes and granules); more preferably from 5% to 15%, more preferably still from 5% to 10%.

The particle size distribution of the dry component can impact the WAI with smaller particle sizes generally, but not predictably, increasing WAI. Particle size distribution can be controlled by varying or bypassing the grinding process.

Other tuber and grain flours such as corn, barley, tapioca, peanut, wheat, oat, rice, and soy meal can be used in the dough. These starch based flours can be blended to make snacks of different composition and flavor.

Other suitable starches can be included in the dry component. Examples of such materials are tapioca starch, cornstarch, oat starch, rice starch and wheat starch. Most preferably these starches are cooked so the starch has gelatinized and then are dried and milled to make a flour. These starches are called pregelatinized starches. For example, the dry component is at least about 90% pregelatinized starch. Preferred flours contain at least about 80% pregelatinized starch.

Preferably the dough material comprises from about 45% to about 65% dry components, more preferably from about 45% to about 60%, more preferably still from about 50% to about 58%.

b. Liquid component

Hydrolyzed starches are also an important ingredient for he processability of the doughs which have relatively low water levels. In the absence of hydrolyzed starches, low moisture levels in the dough can prevent formation of a continuous, smooth extensible dough sheet and can hinder subsequent expansion of the dough pieces during frying, even if the dough can be sheeted. It also affects the elasticity of the dough. In addition, low moisture doughs tend to produce a harder and more brittle texture in the resulting snack products. Unlike most low moisture doughs, the low moisture dough herein can be sheeted and fried with relative ease. A lower level of hydrolyzed starch will increase internal dough expansion and can potentially lead to delamination of the final product with a loss of ridge definition. A higher level can lead to a denser texture. As used herein, the term "hydrolyzed starches" refers to oligosaccharide- type materials that are typically obtained by acid or enzymatic hydrolysis of starches, preferably corn starch. Suitable hydrolyzed starches for inclusion in the dough include maltodextrins and corn syrup solids.

The hydrolyzed starches for inclusion in the dough have Dextrose Equivalent (D.E.) values of from about 5 to about 30, preferably from about 10 to about 20. Maltrin® M050, M100, M150 and M180 (available from Grin Processing Corporation, Iowa) are preferred maltodextrins, and Maltrin® M200, M250, and M300 are preferred corn syrup solids. The D.E. value is a measure of hte reducing equivalence of the hydrolyzed starch referenced to dextrose and expressed as a percent (on a dry basis). The higher the D.E. value, the more reducing sugars are present.

Hydrolyzed starched are included in the dough in an amount of from 1% to 20%, preferably from 5% to 20%, more preferably from 7% to 18%, most preferably 8% to 15%.

Preferably the liquid component comprises from 1% to 25% maltodextrin; more preferably from 5% to 20%, more preferably still from 7% to 18%, most preferably from 8% to 15%.

Emulsifiers are used as a sheeting aid to avoid overworked sticky dough material (overworking increases free amylose levels) and to reduce puffing and blistering in the fried product. Lower moisture dough material, when fried, typically yields harder product. To make products with textures similar to those made from higher moisture doughs, the level of emulsifier is typically reduced. An emulsifier level of greater than 12% can impact the fat content of the final product dramatically by reducing the internal void structure. At levels lower than 0.5%, the dough material is nearly impossible to sheet. Preferably the liquid component comprises from 0.5% to 10% emulsifier; more preferably from 1% to 8%, more preferably still from 1% to 3%. Preferably, the emulsifiers are mono- and di- glycerides of saturated and unsaturated fatty acids, and in particular mono- and di- glycerides of stearic and palmitic acids. Sucrose mono- and diesters of saturated and unsaturated long chain fatty acids can also be used. Other emulsifiers such as polyglycerol esters, polethoxysorbitan esters, can also be used.

Preferably, the emulsifiers are mono- and di- glycerides of saturated and unsaturated fatty acids, and in particular mono- and di-glycerides of stearic and palmitic adds. Sucrose mono- and diesters of saturated and unsaturated long chain fatty acids can also be used. Other emulsifiers such as polyglycerol esters, polyethyoxysorbitan esters, can also be used.

High water levels tend to result in increased expansion and possible delamination of the dough material. This results in poor ridging, unacceptably high fats and foamy structure in the final product. Low water results in a dense and hard final product having unacceptably low fats. Preferably the liquid component comprises from 65% to 98% water; more preferably from 75% to 95%, more preferably still from 85% to 95%.

Other optional ingredients, such as condiments or spices, natural or artificial flavorings, vitamins, antioxidants, colorants, or the like can be suitably included in the dough base which is treated in accordance with the present invention.

Preferably the dough material comprises from 35% to 55% liquid component, more preferably from 40% to 55%, more preferably still from 42% to 50%.

Mill Set-Up

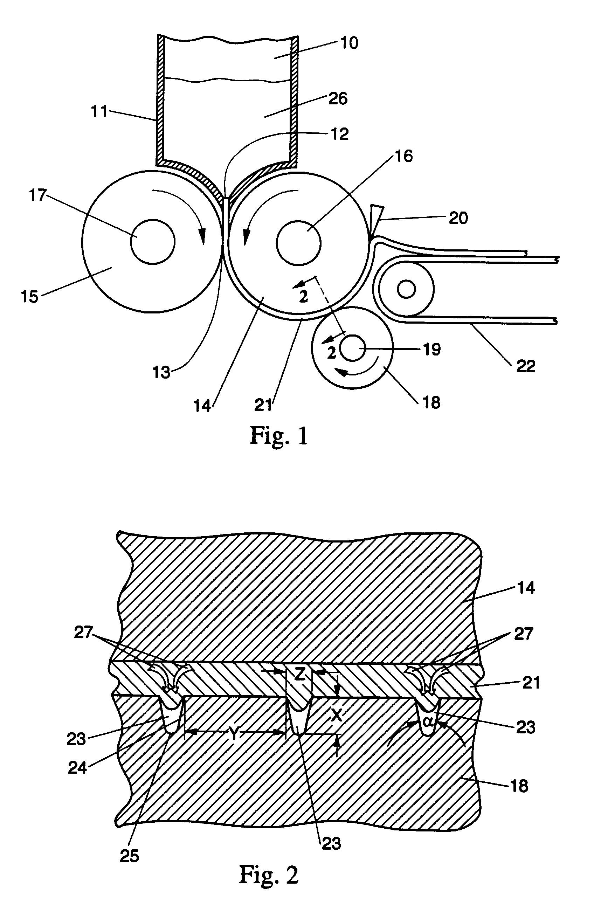

In FIG. 1 there is shown a schematic elevational view of a general means for effecting a rippled design on one surface of a dough sheet. A feed hopper is indicated generally at 10 and consists of a convergent wall structure 11 terminating in a feed opening 12. The opening 12 overlies the clearance, or nip, 13 of front mill roll 14 and back mill roll 15, each of which are rotatably mounted on axles 16 and 17, respectively. The mill rolls are contra-rotating, that is, they rotate in the direction of the arrows, in conventional manner and may be driven by any conventional means, not shown. Also not shown are the mounting bearings for the mill rolls and the means by which the nip between the rolls 14 and 15 may be adjusted. Such expedients are, however, old in the art and are not repeated here to avoid redundancy.

In the illustrated embodiment of the present invention, embossing mill roll 18 is rotatably mounted on axle 19 in a longitudinal relationship to front mill roll 14 and rotates in the direction indicated in conventional manner, contra-rotating to front mill roll 14, driven by means not shown. Scraping blade 20, commonly known as a doctor blade, may be positioned in abutting relationship to front mill roll 14 for the purpose of separating the dough sheet 21 from the surface of said mill roll. Conveying means 22 is disposed near to mill roll 14 so as to support and move dough sheet 21 from mill roll 14 after it has been embossed in the method herein disclosed.

The dough material 26 is placed in the feed hopper 10. The material is fed downwardly through the hopper opening 12 to be evenly deposited between mill rolls 14 and 15 as they rotate in operation. This operation forms the dough material into a dough sheet **21** which sticks to front mill roll **14**. The preferential sticking of the dough sheet **21** to front mill roll **14** rather than to the back mill roll may be effected in any of a number of conventional ways known to the art, such as by employing a speed or temperature differential as between the two mill rolls, or by utilizing a conventional surface treatment on one of the mill rolls. If a speed differential is employed, back roll mill **15** typically has a peripheral speed of from 5 to 50% slower than front mill roll **14**, depending on the operating conditions, with a preferable speed differential of from about 10 to 20% slower. If a temperature differential is employed, the back mill roll **15** is kept from 10° to 100°F (-12°C to 38°C) cooler. This processing condition reflects the basic milling principle that a dough sheet preferentially follows the hotter of two rolls. A temperature differential of from 50° to 65°F (10°C to 18°C) between the surface temperatures of the respective rolls is preferred. Surface treatments of one or both rolls are old in the art and may be employed in the practice of the present invention. Any known surface treatment, for instance, coating the back mill roll with a non-stick surface coating, such as Teflon, may be used to great advantage.

The dough sheet **21** sticking to front mill roll **14** is subsequently passed between the nip of front mill roll **14** and embossing roll **18** whereby a rippled, or corrugated, pattern is impressed into one surface of the dough sheet **21**. The rippled configuration in the dough sheet surface results from the force applied to dough sheet **21** by embossing roll **18**. As best shown in FIG. 2, due to the opposing forces between front mill roll **14** and embossing roll **18**, dough sheet **21** tends to flow into the grooves **23**, as depicted by the flow pattern arrows **27**.

It has been surprisingly discovered that a force of from about 30 lb/in to about 180 lb/in applied to the dough sheet **21** by embossing roll **18** contributes to a surprisingly better product. Preferably the force is from (482.650 - 1.034250 Pa) 70 lb/in to 150 lb/in more preferably from 75 lb/in to 100 lb/in (517125 to 689500 Pa). The force determines the definition of the embossed rippled pattern. Too high a force tends to limit aeration, thereby reducing desirable expansion and the formation of internal void structures during frying. If the force is too low, the rippled pattern tends to be poorly defined, and the product runs a greater risk of becoming delaminated.

After having a rippled configuration impressed into one surface of dough sheet **21**, the dough sheet continues around front mill roll **14** until it is removed by doctor blade **20** onto conveying means **22**. Conveying means **22** transports dough sheet **21** away from the apparatus as depicted in FIG. 1 for further processing into rippled chip-type products, preferably with the smooth surface dough sheet **21** away from the surface of conveying means **22**.

It has been discovered that a specific ratio of mill roll **14** to conveying means **22** speed results in a surprisingly better product. The speed will determine whether the dough sheet will stretch or relax which, in turn, translates into internal expansion and crispiness of the final product. Preferably the ratio of mill roll **14** speed to conveying means **22** speed is about 3:2, more preferably about 4:3, more preferably about 6:5, most preferably about 1:1. Conveying means **22** is preferably a take away belt.

Dough sheet **21** may be further processed in accordance with alternative known methods of forming chip-type products by constrained or known random frying methods, such as those disclosed in US Patent 2,286,644, Pringle *et al.*, issued June 16, 1942 ("Method and Apparatus for Processing Potatoes") and US Patent 3,149,978, Anderson *et al.*, issued September 22, 1964 (Process for Cooking Corn Dough in the Form of Chips"), to obtain rippled chip-type products.

The dough sheet **21** may be further processed in accordance with US Patent 3,998,975, Liepa *et al.*, issued December 21, 1976; US Patent 3,520,248, MacKendrick, issued July 14, 1970; US Patent 3,576,647, Liepa, issued April 27, 1971; US Patent 3,608,474, Liepa, issued September 28, 1971; and/or US Patent 3,626,466, Liepa, issued December 7, 1971. If the dough sheet is further processed in accordance with the above Liepa or MacKendrick methods, the dough sheet, rippled on one side, is removed from front mill roll **14** so that its rippled surface is facing downward and its smooth surface facing upward as the dough sheet is conveyed along a substantially horizontal conveying means. This then permits the cutters and associated vacuum suction conveying means, as described in the above-mentioned MacKendrick or Liepa apparatus patents, to be utilized without any change in the vacuum pressure from that used for smooth-surfaced dough pieces. After being transferred to awaiting mold members, the dough pieces are constrained between a pair of closely fitting, similarly configured shaping molds while being cooked. If the dough pieces are deep fat fried, the shaping molds preferably have apertures to permit the hot frying fat to come into intimate contact with the dough. The shaping mold halves are spaced one from another sufficient to permit the development of a distinct rippled effect on the chip.

It has been further discovered that specific frying temperature and time produce a surprisingly better product. Preferably, the frying operation is carried out at a temperature of from 166°C to 191°C (330°F to 375°F), more preferably from 171°C to 182°C (340°F to 360°F).

Frying time is adjusted to deliver desired moisture content and color in the final product. Preferably frying time is from about 15 seconds to about 30 seconds.

In the practice of the present invention, while both sides of the cooked chips have a distinct rippled effect, the ripples may be slightly more pronounced on the embossed surface.

It has been further discovered that a specific range of thickness of dough sheet **21** results in a surprisingly better product. The thickness of dough sheet **21** affects the depth of ridging, chip weight and heght of the final product Each of these attributes, in turn, affects the texture quality of the final product. If the dough sheet is too thin, there is an increased risk of tearing, thereby precluding continuous sheet formation. Accordingly, the dough sheet **21** should have a thickness of from 1.27mm to 2.54mm (0.05" to 0.1"), more preferably from 1.65mm to 2.03mm 0.065" to 0.08"), most preferably 1.9mm ( 0.075"). This thickness can be readily achieved in practice by adjustment of the size of the nip between opposing mill rolls **14** and **15** and between front mill roll **14** and embossing roll **18**.

In carrying out the present invention, the relative sizes of back mill roll **15** to front mill roll **14**, and front mill roll **14** to embossing roll **18** are not critical. Following basic milling procedure, back mill roll **15** and front mill roll **14** are typically substantially equal in size and mass, as is conventional with oppositely disposed, paired mill rolls. In determining the relative size of front mill roll **14** to embossing roll **18**, consideration-should be given to the factor of the embossing roll **18** having grooves **23** which tend to accentuate any tendency for dough sheet **21** to stick to embossing roll **18** in preference to front mill roll **14**. Those skilled in the art will appreciate that this tendency may be minimized by providing embossing roll **18** with a smaller diameter than front mill roll **14**, thus effecting less nip contact area. Of course, embossing roll **18** must be of sufficient size to avoid flexing across the roll, as can readily be appreciated.

In the illustrated embodiment, embossing roll **18** mounted on axle **19** may be retractable to provide for flexibility in processing chip-type products. By retractability, it is meant that the distance between axle **16** and axle **19** be variable, so that embossing roll **18** may or may not contact dough sheet **21** as it passes around front mill roll **14**, depending upon the position of embossing roll **18**. The means by which such an expedient may be effected are old in the art and are not repeated here to avoid redundancy. This expedient may be employed to permit flexibility in processing either flat-surfaced or rippled chip-type products from formulated dough sheets without the necessity of major apparatus changes. This expedient is especially useful in the practice of the above-mentioned MacKendrick or Liepa apparatus patents, since the same paired mating mold members may thus be used in producing either smooth or rippled chips.

Embossing Roll

As best shown in the enlarged fragmentary cross-sectional side view of FIG. 2, the embossing roll **18** has a plurality of annularly disposed grooves generally indicated at **23.** Each groove **23** is disposed into the surface a distance $x$ and is spaced apart on the mill roll surface, one from another, a distance $y$. Each groove **23** is a distance $z$ wide at the surface of the embossing roll **18** and consists of converging sides **24** which are disposed at an acute angle $\alpha$ to each other and converge at the groove bottom **25**.

It has been discovered that surprisingly better product can be obtained when measurements $x$, $y$, $z$, and $\alpha$ are as follows:

Distance $x$ is preferably from 1.27mm to 2.54mm (0.05" to 0.1"); more preferably from 1.65mm to 2.16mm (0.065" to 0.085"); most preferably 1.91mm ( 0.075").

Distance $y$ is preferably from about 1.78mm to about 3.3mm 0.07" to 0.13"); more preferably from 2.29mm to 2.79mm (0.09" to 0.11"); most preferably 1.14mm (0.1").

Distance $z$ is preferably from about 0.65mm to about 1.65mm (0.025" to 0.065"); more preferably from 0.89mm to 1.4mm (0.035" to 0.055"); most preferably 1.14mm ( 0.045").

Preferably, distance $y$ between the grooves, and groove width $z$ have a ratio of from 1:1.07 to 1:5.2, more preferably from 1:1.64 to 1:3.14, most preferably 1:2.22.

Acute angle $\alpha$ is preferably from 10° to 40°; more preferably from 15° to 35°; most preferably 25°.

It has been further discovered that a surprisingly better product is obtained when bottom **25** is rounded, rather than peaked or flat. A rounded bottom facilitates release of the dough material from the grooves, resulting in a more continuous, smoother dough sheet.

It has been discovered that these specifications surprisingly result in more dough mass being transferred from the ridge to the backsheet of the final product. This, in turn, surprisingly results in a final product having better defined ridges, improved crispness and improved break down more readily during mastication.

Chip-Type Product Attributes

The chip-type product resulting from the process of the present invention has certain attributes distinct from chip-type products produced by previously known methods. These attributes result in a surprisingly better product, resulting in superior consumer acceptance. In particular, the chip-type produced by the present invention have improve mouthfeel characteristics including an increased level of crispness per level of hardness and a decreasing thickness sensation of hte chip mass that remains in the mouth during mastication. The geometric charater of the ridges permits a more uniform cooking of the dough that allows the center of the ridge to be cooked without overcooking the edge. The even rate of evaporation of water from the ridges during frying allows the center ridge structure to expand consistent with the surface structure versus being consstained by an overcooked surface structure. This importantly provides crispness with a decreasing level of hardness which is preferable to the consumer. Prior to the present invention, the only means of increasing product crispness was to simultaneously increase hardness. The present invention allows a greater decoupling of these attributes.

Products from the present invention avoid a mealy texture, characterized by a thicker mass sensation during chewing, since the product undergoes a uniform degree of cook. The center of the ridges are cooked similarly to the edges thus limiting the amount of more dense material that would swell to a mealy paste upon hydration during mastication.

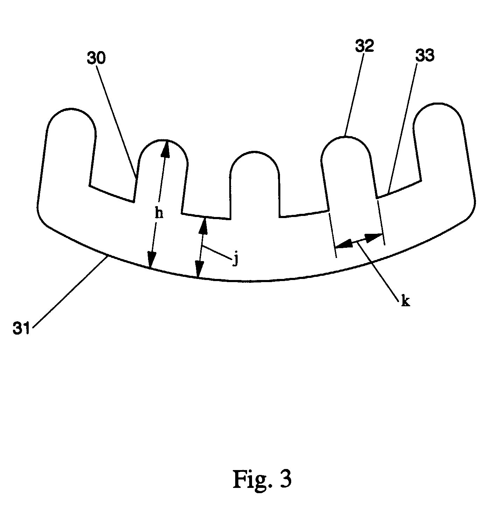

FIG. 3 illustrates a cross-sectional view of a segment of a chip-type product produced by the process of the present invention. The chip-type product has substantially parallel arcuate ridges and grooves extending across both surfaces which effect a rippled appearance to the chip-type product. The chip-type product comprises a top surface **30** and a bottom surface **31**. The top surface **30** comprises a first set of ridges **32** ("top surface ridges") and a first set of grooves **33** ("top surface grooves"). The bottom surface **31** is relatively smooth or comprises a second set of ridges ("bottom surface ridges") and a second set of grooves ("bottom surface grooves"). The second set of ridges and grooves are relatively less pronounced that the first set of ridges and grooves. The embossed surface of dough sheet **21** of FIG. 2, formed by embossing roll **18** of FIG. 2, corresponds to the first surface **30** of the resulting chip-type product. Each first ridge **32** is a distance $h$ from bottom surface **31**. Each first groove **33** is a distance $j$ from bottom surface **31**. Each first groove **33** has a width distance $k$ where the groove surface and the bases of the surrounding ridges coincide. As used herein, "width distance between a pair of ridges" means distance $k$.

It has been discovered that specific values for distance $h$ and distance $j$ result in a surprisingly better chip-type product. Preferably the ratio of distance $h$ to distance $j$ is from 1:3 to 2:3, more preferably from 2:5 to 2:3, most preferably about 3:7.

Furthermore, it has been discovered that a specific ratio of distance $k$ to distance $h$ contributes to a surprisingly better chip-type product. Preferably the ratio of distance $k$ to distance $h$ is 4:5, more preferably from 9:10, most preferably 1:1.

The chip-type product produced by the process of the present invention preferably has an individual chip weight range of from 2.1 g to 2.7 g; more preferably from about 2.2 to 2.5; most preferably 2.35.

The stack height for 40 chips produced by the process of the present invention is preferably from 58 mm to 72 mm; more preferably from 62 mm to 66 mm; most preferably 64 mm.

The percent moisture content of the chip-type product produced by the process of the present invention is preferably from 1% to 3%; more preferably from 1.5% to 2.75%; most preferably 2.25%.

The percent oil content of the chip-type product produced by the process of the present invention is preferably from 28% to 40%; more preferably from 30% to 38%; most preferably 34%.

The color of the product is preferably from 55 to 71 Hunter color units, more preferably from 61 to 68 units, most preferably 63 units. Hunter color is determined by grinding 45 to 50 chips to a particle size of 3 to 9mm. The ground chips are read by a Hunter Labs Qual-Probe (Hunter Labs, Washington, D.C.) to provide a Hunter color measurement.

The following example further describes and demonstrates a preferred embodiment within the scope of the present invention. The example is given solely for the purpose of illustration, and is not to be construed as limiting the present invention since many variations thereof are possible without departing from its spirit and scope.

EXAMPLE 1

A rippled chip-type product produced by the process of the present invention is made as follows:

Dry Component Formulation

| Ingredient | WAI |
| --- | --- |
| Potato Flakes | 8.5 |
| Potato Granules | 5.4 |
| Potato Starch | 2.0 |

The dry matter component WAI = 6.5

Liquid Component Formulation

| Ingredient | % |
|---|---|
| Water | 89.6 |
| Maltodextrin | 8.9 |
| Emulsifier | 1.5 |

The dry components are blended with the liquid components in a Turbulizer® mixer for between 30-60 seconds to form a loose, dry dough. The dry components are blended with the liquid components at a ratio of about 1.1:1.0. The maltodextrin is pre-blended with the water. The emulsifier is added directly at the mixer.

The dough is sheeted continuously by feeding through a pair of sheeting rolls to form a continuous elastic sheet. The embossing roll contacts the dough sheet at a pressure of 150 pounds per linear inch (1.034 250 Pa) The dough sheet is then cut into oval shaped pieces and fried in a constrained frying mold at 176°C (350°F) to dryness (about 20 seconds). The frying oil is cottonseed oil. The fried pieces contain about 34% fat. Twenty fried oval pieces, when fitted and stacked together, have a combined height of 62mm and a combined weight of 50.0 grams.

The fried products were examined by an expert sensory panel to determine the eating quality, texture, flavor, etc. Each attribute was rated on a nine point hedonic scale. For example, when rating crispness, a rating 1 would indicate a product that was "not crisp" while a rating of 9 would indicate a product that was "extremely crisp". With regard to thin/thick texture and mouthmelt (fast to slow) a lower number on the nine point scale is indicative of desirability. To better illustrate the texture benefit of the present invention, examination of the ratio of crispness to hardness ratings is useful.

Sensory panel evaluation of this product ("A") versus a fabricated ripple chip-type product made pursuant to in S. Patent 3,956,517 ("B") yielded the following results where the (s) indicated a statistically significant difference between the two product's attributes at a the 95% confidence limit:

| Attribute | A | | B |
|---|---|---|---|
| Color | 5.5 | (s) | 7.8 |
| Hardness | 5.9 | (s) | 7.1 |
| Crispness | 6.7 | (s) | 7.3 |
| Crispness/Hardness Ratio | 1.4 | (s) | 1.0 |
| Saltiness | 5.0 | | 5.0 |
| Overall Flavor | 6.0 | (s) | 5.7 |
| Potato Chip Flavor | 5.5 | | 5.2 |
| Uncharacteristic Flavor | 1.7 | | 1.8 |
| Doneness | 5.6 | (s) | 6.9 |
| Thin/Thick Texture | 6.0 | (s) | 7.1 |
| Oily Greasy Mouthfeel | 3.4 | | 3.0 |
| Mouthmelt | 4.5 | (s) | 5.0 |
| Overall Liking | 6.4 | (s) | 5.7 |

The results show that a greater level of crispness per unit if hardness with lower thickness of chip mass sensation was obtained with the present invention. The color and doneness attribute support that less cooking (i.e. avoiding overcooking) of the product occurred and crispness could be maintained. Overall a better balance of product attributes was delivered that was more preferred.

All publications and patent applications mentioned hereinabove am hereby incorporated in their entirety by reference.

It is understood that the examples and embodiments described herein are for illustrative purposes only and that various modifications or changes in light thereof will be suggested to one skilled in the art and are to be included in the spirit and purview of this application and scope of the appended claims.

## Claims

1. An improved process for forming a rippled chip-type products from a formulated dough material, of the type having the steps of

   a) sheeting the formulated dough material to form a coherent workable dough sheet;
   b) impressing a rippled configuration of substantially parallel arcuate ridges and grooves on only one surface of the dough sheet by passing the dough sheet through the nip of a pair of mill rolls, one of the rolls having a smooth surface and the other mill roll having an annularly grooved surface;
   c) removing the surface-configured dough sheet from the mill rolls;
   d) cutting suitably shaped pieces from the surface-configured dough sheet; and
   e) cooking the dough pieces thereby to provide a crispy chip-type product having a series of distinct and substantially parallel arcuate ridges and grooves extending across both a top surface and a bottom surface which affect a rippled appearance to the chip-type product;
   the improvement characterized in that:

   i) the formulated dough comprises from 45% to 65% of a dry component and from 35% to 55% of a liquid component blended together, wherein the dry component comprises from 25% to 75% potato flakes, from 25% to 75% potato granules, from 5% to 20% potato starch, and the liquid component comprises from 1% to 25% maltodextrin, from 0.5% to 10% emulsifier, and from 65% to 98% water;
   ii) the dough sheet has a thickness of from 1.27mm to 2.54mm;
   iii) the annularly grooved roll comprises a plurality of annularly disposed grooves wherein the grooves are disposed from 1.27mm to 2.54mm from the annularly grooved roll surface, spaced apart on the annularly grooved roll surface, one from another, from 0.018mm to 1.65, having a distance of from 0.51mm to 3.3mm wide at the surface of the annularly grooved roll, and consisting of converging sides which are disposed at an acute angle of from 10° to 40° and having a rounded groove bottom; and
   iv) the rippled configuration is impressed on the dough sheet with a pressure of from 30lb./in. to 180 lb./in. (206.850 Pa to $1.241 \cdot 10^3$ Pa)

2. The process of Claim 1 characterized in that

   a) the dry component comprises from 35% to 65% potato flakes, from 35% to 65% potato granules, and from 5% to 15% potato starch;
   b) the liquid component comprises from 5% to 20% maltodextrin, from 1% to 8% emulsifier and from 75% to 95% water;
   c) the dough sheet has a thickness of from 1.65mm to 2.03mm;
   d) the grooves of the annularly grooved roll are disposed from 1.65mm to 2.16mm from the annularly grooved roll surface, spaced apart on the annularly grooved roll surface, one from another, from 2.29mm to 2.79mm, have a distance of from 0.89mm to 1.4mm wide at the surface of the annularly grooved roll, consist of converging sides which are disposed at an acute angle of from 15° to 35°; and
   e) impressing the rippled configuration on the dough sheet with a pressure of from 70 lb/in. to 150 lb/in. (482.650 Pa to 1.304250 Pa)

3. A process for forming rippled chip-type pacts from a formulated dough material characterized in that the process comprises:

   a) sheeting the formulated dough material to form a coherent workable dough sheet, wherein

   i) the formulated dough material comprises from 45% to 65% of a dry component and from 35% to 55% of a liquid component blended together, wherein the dry component comprises from 25% to 75% potato flakes, from 25% to 75% potato granules, from 5% to 20% potato starch, and the liquid component comprises from 1% to 25% maltodextrin, from 0.5% to 10% emulsifier, and from 65% to 98% water, and

ii) the dough sheet has a thickness of from 1.27mm to 2.54;

b) impressing a rippled configuration of substantially parallel arcuate ridges and grooves on only one surface of the dough sheet by passing the dough sheet through the nip of a pair of mill rolls, one of the rolls having a smooth surface and the other mill roll having an annularly grooved surface wherein

i) the annularly grooved roll comprises a plurality of annularly disposed grooves wherein the grooves are disposed from 1.27mm to 2.54mm from the annularly grooved roll surface, spaced apart on the annularly grooved roll surface, one from another, from 0.018mm to 1.65mm, having a distance of from 0.51mm to 3.3mm wide at the surface of the annularly grooved roll, and consisting of converging sides which are disposed at an acute angle of from 10° to 40° and having a rounded groove bottom,

ii) the rippled configuration is impressed on the dough sheet with a pressure of from 30 lb./in. to 180 lb./in. (206.850 Pa to $1.241 \cdot 10^3$ Pa)

c) cutting suitably shaped pieces from the surface-configured dough sheet;
d) cooking the dough pieces thereby to provide a crispy chip-type product having a series of distinct and substantially parallel arcuate ridges and grooves extending across both a top surface and a bottom surface which effect a rippled appearance to the chip-type product.

4. The process of Claim 3 characterized in that

a) the dry component comprises from 35% to 65% potato flakes, from 35% to 65% potato granules, and from 5% to 15% potato starch;
b) the liquid component comprises from 5% to 20% maltodextrin, from 1% to 8% emulsifier and from 75% to 95% water;
c) the dough sheet has a thickness of from 1.65mm to 2.03mm;
d) the grooves of the annularly grooved roll are disposed from 1.65mm to 2.16mm from the annularly grooved roll surface, spaced apart on the annularly grooved roll surface, one from another, from 2.29mm to 2.79mm, have a distance of from 0.89mm to 1.4mm wide at the surface of the annularly grooved roll, consist of converging sides which are disposed at an angle of from 15° to 35°, and have a rounded groove bottom; and
e) impressing the rippled configuration on the dough sheet with a pressure of from 70 lb./in. to 150 lb./in. (482.650 Pa to 1.034 250 Pa)

5. The process of any of Claims 1-4 characterized in that the dough pieces are fried at a temperature of from 154°C to 191°C for from 15 seconds to 30 seconds.

6. The chip-type product produced by the process of any of Claims 1-4.

7. The chip type product produced by the process of any of Claims 1-4 characterized in that the chip-type product comprises a top surface and a bottom surface, wherein the top surface comprises substantially parallel arcuate ridges and grooves, wherein the ratio of the distance from each ridge to the bottom surface to the distance from each groove to the bottom surface is 2:3 to 1:3.

8. The chip type product produced by the process of any of Claims 1-4 characterized in that the chip-type product comprises a top surface and a bottom surface, wherein the top surface comprises substantially parallel arcuate ridges and grooves, wherein the ratio of the distance from each ridge to the bottom surface to the distance from each groove to the bottom surface is from 2:3 to 1:3 and wherein the ratio of the width distance between a pair of ridges to the distance from each ridge to the bottom surface is about 4:5.

9. A chip-type product characterized in that the chip-type product comprises a top surface and bottom surface, wherein the top surface comprises substantially parallel arcuate ridges and grooves, wherein the ratio of the distance from each ridge to the bottom surface to the distance from each groove to the bottom surface is from 1:3 to 2:3.

**10.** The chip type product of Claim 9, characterized in that the ratio of the width distance between a pair of ridges to the distance from each ridge to the bottom surface is about 4:5.

**Patentansprüche**

1. Verbessertes Verfahren zum Bilden riffelchipsartiger Produkte aus einem formulierten Teigmaterial, von der Art mit den Schritten

a) Ausbilden des zubereiteten Teigmaterials zu einem Blatt, um ein zusammenhängendes, verarbeitbares Teigblatt zu bilden;
b) Einprägen einer Riffelkonfiguration aus im wesentlichen parallelen bogenförmigen Rippen und Nuten auf nur eine Seite des Teigblattes, indem das Teigblatt durch den Spalt zweier Walzen hindurchgeführt wird, wobei eine Walze eine glatte Oberfläche und die andere Walze eine ringförmig genutete Oberfläche hat;
c) Entfernen des oberflächenkonfigurierten Teigblattes von den Walzen;
d) Schneiden geeignet geformter Stücke aus dem oberflächenkonfigurierten Teigblatt; und
e) Kochen der Teigstücke, um dadurch ein knuspriges chipsartiges Produkt mit einer Reihe von ausgeprägten und im wesentlichen parallelen bogenförmigen Rippen und Nuten zu schaffen, die sich sowohl über eine Oberseite als auch eine Unterseite erstrecken und dem chipsartigen Produkt ein geriffeltes Aussehen verleihen; wobei sich die Verbesserung dadurch auszeichnet, daß

i) der zubereitete Teig 45% bis 65% einer Trockenkomponente und 35% bis 55% einer Flüssigkomponente aufweist, die miteinander vermischt sind, wobei die Trockenkomponente 25% bis 75% Kartoffelflocken, 25% bis 75% Kartoffelgranulat, 5% bis 20% Kartoffelstärke und die Flüssigkomponente 1% bis 25% Maltosedextrin, 0,5% bis 10% Emulgator und 65% bis 98% Wasser aufweist;
ii) das Teigblatt eine Dicke von 1,27 mm bis 2,54 mm hat;
iii) die ringförmig genutete Walze eine Mehrzahl von ringförmig angeordneten Nuten aufweist, wobei die Nuten in einem Abstand von 1,27 mm bis 2,54 mm von der ringförmig genuteten Walzenoberfläche liegen, auf der ringförmig genuteten Walzenoberfläche einen gegenseitigen Abstand von 0,018 mm bis 1,65 mm haben, an der Oberfläche der ringförmig genuteten Walze eine Breite von 0,51 mm bis 3,3 mm haben und aus konvergierenden Seiten bestehen, die unter einem spitzen Winkel von 10° bis 40° angeordnet sind und einen abgerundeten Nutboden haben; und
iv) die Riffelkonfiguration auf das Teigblatt mit einem Druck von 30 Pfund/Zoll bis 180 Pfund/Zoll (206850 Pa bis 1241 · 10³ Pa) aufgeprägt wird.

2. Verfahren nach Anspruch 1, dadurch gekennzeichnet, daß

a) die Trockenkomponente 35% bis 65% Kartoffelflocken, 35% bis 65% Kartoffelgranulat und 5% bis 15% Kartoffelstärke aufweist;
b) die Flüssigkomponente 5% bis 20% Maltosedextrin, 1% bis 8% Emulgator und 75% bis 95% Wasser aufweist;
c) das Teigblatt eine Dicke von 1,65 mm bis 2,03 mm hat;
d) die Nuten auf der ringförmig genuteten Walze in einem Abstand von 1,65 mm bis 2,16 mm von der ringförmig genuteten Walzenoberfläche liegen, auf der ringförmig genuteten Walzenoberfläche einen gegenseitigen Abstand von 2,29 mm bis 2,79 mm haben, an der Oberfläche der ringförmig genuteten Walze eine Breite von 0,89 mm bis 1,4 mm haben, und aus konvergierenden Seiten bestehen, die unter einem spitzen Winkel von 15° bis 35° angeordnet sind; und
e) die Riffelkonfiguration auf das Teigblatt mit einem Druck von 70 Pfund/Zoll bis 150 Pfund/Zoll (482650 Pa bis 1034250 Pa) aufgeprägt wird.

3. Verfahren zum Bilden riffelchipsartiger Produkte aus einem zubereiteten Teigmaterial, dadurch gekennzeichnet, daß das Verfahren aufweist:

a) Ausbilden des zubereiteten Teigmaterials zu einem Blatt, um ein zusammenhängendes verarbeitbares Teigblatt zu bilden, wobei

i) das zubereitete Teigmaterial 45% bis 65% einer Trockenkomponente und 35% bis 55% einer Flüssigkomponente aufweist, die miteinander vermischt sind, wobei die Trockenkomponente 25% bis 75% Kartoffelflocken, 25% bis 75% Kartoffelgranulat, 5% bis 20% Kartoffelstärke und die Flüssigkomponente 1% bis 25% Maltosedextrin, 0,5% bis 10% Emulgator und 65% bis 98% Wasser aufweist, und

ii) das Teigblatt eine Dicke von 1,27 mm bis 2,54 mm hat;

b) Einprägen einer Riffelkonfiguration aus im wesentlichen parallelen bogenförmigen Rippen und Nuten auf nur einer Oberfläche des Teigblattes, indem das Teigblatt durch den Spalt zweier Walzen hindurchgeführt wird, wobei eine der Walzen eine glatte Oberfläche und die andere Walze eine ringförmig genutete Oberfläche besitzt, wobei

i) die ringförmig genutete Walze eine Mehrzahl von ringförmig angeordneten Nuten aufweist, wobei die Nuten einen Abstand von 1,27 mm bis 2,54 mm von der ringförmig genuteten Walzenoberfläche haben, auf der ringförmig genuteten Walzenoberfläche einen gegenseitigen Abstand von 0,018 mm bis 1,65 mm haben, an der Oberfläche der ringförmig genuteten Walze eine Breite von 0,51 mm bis 3,3 mm haben und aus konvergierenden Seiten bestehen, die unter einem spitzen Winkel von 10° bis 40° angeordnet sind und einen abgerundeten Nutboden haben, und

ii) die Riffelkonfiguration auf das Teigblatt mit einem Druck von 30 Pfund/Zoll bis 180 Pfund/Zoll (206850 Pa bis 1241000 Pa) aufgeprägt wird,

c) Schneiden geeignet geformter Stücke aus dem oberflächenkonfigurierten Teigblatt; und

d) Kochen der Teigstücke, um dadurch ein knuspriges chipsartiges Produkt mit einer Reihe von ausgeprägten und im wesentlichen parallelen bogenförmigen Rippen und Nuten zu schaffen, die sich über sowohl eine Oberseite als auch eine Unterseite erstrecken, mit dem Effekt eines geriffelten Aussehens des chipsartigen Produktes.

4.  Verfahren nach Anspruch 3, dadurch gekennzeichnet, daß

a) die Trockenkomponente 35% bis 65% Kartoffelflocken, 35% bis 65% Kartoffelgranulat und 5% bis 15% Kartoffelstärke aufweist;

b) die Flüssigkomponente 5% bis 20% Maltosedextrin, 1% bis 8% Emulgator und 75% bis 95% Wasser aufweist;

c) das Teigblatt eine Dicke von 1,65 mm bis 2,03 mm hat;

d) die Nuten der ringförmig genuteten Walze einen Abstand von 1,65 mm bis 2,16 mm von der ringförmig genuteten Walzenoberfläche haben, auf der ringförmig genuteten Walzenoberfläche einen gegenseitigen Abstand von 2,29 mm bis 2,79 mm haben, an der Oberfläche der ringförmig genuteten Walze eine Breite von 0,89 mm bis 1,4 mm haben, und aus konvergierenden Seiten bestehen, die unter einem spitzen Winkel von 15° bis 35° angeordnet sind, und einen abgerundeten Nutboden haben; und

e) die Riffelkonfiguration auf das Teigblatt mit einem Druck von 70 Pfund/Zoll bis 150 Pfund/Zoll (482650 Pa bis 1034250 Pa) aufgeprägt wird.

5.  Verfahren nach einem der Ansprüche 1 bis 4, dadurch gekennzeichnet, daß die Teigstücke bei einer Temperatur von 154°C bis 191°C über 15 Sekunden bis 30 Sekunden gebacken werden.

6.  Chipsartiges Produkt, das mit Hilfe des Verfahrens nach einem der Ansprüche 1 bis 4 hergestellt worden ist.

7.  Chipsartiges Produkt, das mit Hilfe des Verfahrens nach einem der Ansprüche 1 bis 4 hergestellt worden ist, dadurch gekennzeichnet, daß das chipsartige Produkt eine Oberseite und eine Unterseite aufweist, wobei die Oberseite im wesentlichen parallele bogenförmige Rippen und Nuten aufweist, wobei das Verhältnis des Abstandes jeder Rippe von der Unterseite zum Abstand jeder Nut von der Unterseite 2:3 bis 1:3 beträgt.

8.  Chipsartiges Produkt, das mit dem Verfahren nach einem der Ansprüche 1 bis 4 hergestellt worden ist, dadurch gekennzeichnet, daß das chipsartige Produkt eine Oberseite und eine Unterseit aufweist, wobei die Oberseite im wesentlichen parallele bogenförmige Rippen und Nuten aufweist, wobei das Verhältnis des Abstandes jeder Rippe von der Unterseite zum Abstand jeder Nut von der Unterseite 2:3 bis 1:3 beträgt und wobei das Verhältnis des Breitenabstandes zwischen zwei Rippen zum Abstand jeder Rippe von der Unterseite etwa 4:5 beträgt.

9.  Chipsartiges Produkt, dadurch gekennzeichnet, daß das chipsartige Produkt eine Oberseite und eine Unterseite aufweist, wobei die Oberseite im wesentlichen parallele bogenförmige Rippen und Nuten aufweist, wobei das Verhältnis des Abstandes jeder Rippe von der Unterseite zum Abstand jeder Nut von der Unterseite 1:3 bis 2:3 beträgt.

**10.** Chipsartiges Produkt nach Anspruch 9, dadurch gekennzeichnet, daß das Verhältnis des Breitenabstandes zwischen zwei Rippen zum Abstand jeder Rippe von der Unterseite etwa 4:5 beträgt.

**Revendications**

**1.** Procédé amélioré pour former des produits du type chip ondulé à partir d'une matière formant pâte élaborée, du type comportant les étapes consistant à :

a) mettre en feuille le matériau formant pâte élaborée pour former une feuille de pâte cohérente pouvant être travaillée,
b) imprimer une configuration ondulée constituée de nervures et de gorges en arc sensiblement parallèles sur une seule surface de la feuille de pâte en faisant passer la feuille de pâte à travers l'interstice de deux rouleaux de laminage, un premier des rouleaux ayant une surface lisse et l'autre rouleau de laminage ayant une surface à gorges annulaires,
c) enlever la feuille de pâte configurée en surface des rouleaux de laminage,
d) découper des morceaux ayant une forme adaptée à partir de la feuille de pâte configurée en surface, et
e) cuire les morceaux de pâte pour ainsi fournir un produit du type chip croquant ayant une série de nervures et de gorges en arc distinctes et sensiblement parallèles s'étendant à travers à la fois la surface supérieure et la surface inférieure, qui donnent un aspect ondulé au produit du type chip,
l'amélioration étant caractérisée en ce que :

i) la pâte élaborée comporte de 45 % à 65 % de constituant sec et de 35 % à 55 % de constituant liquide mélangés ensemble, le constituant sec comportant de 25 % à 75 % de flocons de pomme de terre, de 25 % à 75 % de granulés de pomme de terre, de 5 % à 20 % d'amidon de pomme de terre, et le constituant liquide comportant de 1 % à 25 % de maltodextrine, de 0,5 % à 10 % d'émulsifiant, et de 65 % à 98 % d'eau,
ii) la feuille de pâte a une épaisseur allant de 1,27 mm à 2,54 mm,
iii) le rouleau à gorges annulaires comporte plusieurs gorges disposées de manière annulaire, les gorges étant disposées entre 1,27 mm et 2,54 mm à partir de la surface du rouleau à gorges annulaires, en étant espacées sur la surface du rouleau à gorges annulaires, l'une de l'autre, de 0,018 mm à 1,65 mm en ayant une largeur allant de 0.51 mm à 3,3 mm au niveau de la surface du rouleau à gorges annulaires, et comportant des côtés convergents qui sont disposés selon un angle aigu allant de 10° à 40° et ayant un fond de gorge arrondi, et
iv) la configuration ondulée est imprimée sur la feuille de pâte à l'aide d'une pression allant de 206850 Pa à $1,241 \times 10^3$ Pa (30 lb/in. à 180 lb/in.).

**2.** Procédé selon la revendication 1, caractérisé en ce que :

a) le constituant sec comporte de 35 % à 65 % de flocons de pomme de terre, de 35 % à 65 % de granulés de pomme de terre, et de 5 % à 15 % d'amidon de pomme de terre,
b) le constituant liquide comporte de 5 % à 20 % de maltodextrine, de 1 % à 8 % d'émulsifiant et de 75 % à 95 % d'eau,
c) la feuille de pâte a une épaisseur allant de 1,65 mm à 2,03 mm,
d) les gorges du rouleau à gorges annulaires sont disposées entre 1,65mm et 2,16 mm à partir de la surface du rouleau à gorges annulaires, en étant espacées sur la surface du rouleau à gorges annulaires, l'une de l'autre, de 2,29 mm à 2,79 mm, ont une largeur allant de 0,89 mm à 1,4 mm à la surface du rouleau à gorges annulaires, ayant des côtés convergents qui sont disposés selon un angle aigu allant de 15° à 35°, et
e) on imprime la configuration ondulée sur la feuille de pâte avec une pression de 482650 Pa à 1034250 Pa (70 lb/in. à 150 lb/in.).

**3.** Procédé pour former des produits du type chip ondulé à partir d'une matière formant pâte élaborée, caractérisé en ce que le procédé comporte les étapes consistant à :

a) mettre en feuille la matière de pâte élaborée pour former une feuille de pâte cohérente pouvant être travaillée, dans laquelle

i) la matière de pâte élaborée est constituée de 45 % à 65 % d'un constituant sec et de 35 % à 55 % d'un constituant liquide mélangés ensemble, le constituant sec comportant de 25 % à 75 % de flocons de pomme de terre, de 25 % à 75 % de granulés de pomme de terre, de 5 % à 20 % d'amidon de pomme de terre, et le constituant liquide comportant de 1 % à 25 % de maltodextrine, de 0,5 % à 10 % d'émulsifiant, et de 65 % à 98 % d'eau, et

ii) la feuille de pâte a une épaisseur allant de 1,27 mm à 2,54 mm,

b) imprimer une configuration ondulée constituée de nervures et de gorges en arc sensiblement parallèles sur une seule surface de la feuille de pâte en faisant passer la feuille de pâte à travers l'interstice de deux rouleaux de laminage, l'un des rouleaux ayant une surface lisse et l'autre rouleau de laminage ayant une surface à gorges annulaires,

i) le rouleau à gorges annulaires comportant plusieurs gorges disposées de manière annulaire, les gorges étant disposées entre 1,27 mm et 2,54 mm à partir de la surface du rouleau à gorges annulaires, en étant écartées sur la surface du rouleau à gorges annulaires, l'une de l'autre, de 0,018 mm à 1,65 mm, ayant une largeur allant de 0,51 mm à 3,3 mm à la surface du rouleau à gorges annulaires, et constituées de côtés convergents qui sont disposés selon un angle aigu allant de 10° à 40° et ayant un fond de gorge arrondi, et
ii) la configuration ondulée étant imprimée sur la feuille de pâte à l'aide d'une pression allant de 206850 Pa à 1,241 × 10$^3$ Pa (30 lb/in. à 180 lb/in.)

c) découper des morceaux de forme adaptée à partir de la feuille de pâte ayant sa surface configurée, et
d) cuire les morceaux de pâte pour fournir ainsi un produit du type chip croustillant ayant une série de nervures et de gorges en arc sensiblement parallèles s'étendant à travers à la fois la surface supérieure et la surface inférieure, qui donnent un aspect ondulé au produit du type chip.

4. Procédé selon la revendication 3, caractérisé en ce que

a) le constituant sec comporte de 35 % à 65 % de flocons de pomme de terre, de 35 % à 65 % de granulés de pomme de terre, et de 5 % à 15 % d'amidon de pomme de terre,
b) le constituant liquide comporte de 5 % à 20 % de maltodextrine, de 1 % à 8 % d'émulsifiant et de 75 % à 95 % d'eau,
c) la feuille de pâte a une épaisseur allant de 1,65 mm à 2,03 mm,
d) les gorges du rouleau à gorges annulaires sont disposées entre 1,65 mm et 2,16 mm à partir de la surface du rouleau à gorges annulaires, sont espacées l'une de l'autre à la surface du rouleau à gorges annulaires de 2,29 mm à 2,79 mm, ont une largeur de 0,89 mm à 1,4 mm à la surface du rouleau à gorges annulaires, sont constituées de côtés convergents qui sont disposés selon un angle aigu allant de 15° à 35°, et ont un fond de gorge arrondi, et
e) on imprime la configuration ondulée sur la feuille de pâte avec une pression allant de 482650 Pa à 1034250 Pa (70 lb/in. à 150 lb/in.).

5. Procédé selon l'une quelconque des revendications 1 à 4, caractérisé en ce que les morceaux de pâte sont frits à une température allant de 154°C à 191°C entre 15 secondes et 30 secondes.

6. Produit du type chip produit par le procédé selon l'une quelconque des revendications 1 à 4.

7. Produit du type chip produit par le procédé selon l'une quelconque des revendications 1 à 4, caractérisé en ce que le produit du type chip comporte une surface supérieure et une surface inférieure, la surface supérieure comportant des nervures et des gorges en arc sensiblement parallèles, le rapport entre la distance à partir de chaque nervure jusqu'à la surface inférieure sur la distance allant de chaque gorge jusqu'à la surface inférieure étant de 2:3 à 1:3.

8. Produit du type chip produit par le procédé selon l'une quelconque des revendications 1 à 4, caractérisé en ce que le produit du type chip comporte une surface supérieure et une surface inférieure, la surface supérieure comportant des nervures et gorges en arc sensiblement parallèles, le rapport entre la distance partant de chaque nervure jusqu'à la surface inférieure sur la distance partant de chaque gorge jusqu'à la surface inférieure étant de 2:3 à 1:3 et le rapport de la distance en largeur entre deux nervures sur la distance à partir de chaque nervure jusqu'à la surface inférieure étant d'environ 4:5.

9. Produit du type chip caractérisé en ce que le produit du type chip comporte une surface supérieure et une surface inférieure, la surface supérieure comportant des nervures et gorges en arc sensiblement parallèles, le rapport entre la distance allant de chaque nervure jusqu'à la surface inférieure sur la distance allant de chaque gorge jusqu'à la surface inférieure étant de 1:3 à 2:3.

10. Produit du type chip selon la revendication 9, caractérisé en ce que le rapport de distance en largeur entre deux nervures sur la distance allant de chaque nervure jusqu'à la surface inférieure est d'environ 4:5.

Fig. 1

Fig. 2

Fig. 3